# DEMANDE DE BREVET EUROPEEN

(11) **EP 0 547 943 A1**
(43) Date de publication de la demande: **23.06.1993**
(21) Numéro de dépôt: 92403313.7
(22) Date de dépôt: 08.12.1992
(51) Int. Cl.: F21Q 3/00, G09F 9/33, H01L 33/00, H01L 25/075, B60Q 3/04, G01D 11/28

(54) **Platine éclairante**

(30) Priorité: 11.12.1991 FR 9115365
(71) Demandeur: VIBRACHOC, F-91028 Evry Cédex (FR)
(72) Inventeur: Bardy, Bernard, F-94440 Villecresnes (FR)
(74) Mandataire: Gosse, Michel

(57) **Abrégé**

Platine éclairante pour tableau de bord d'aéronef, comportant une plaque support (1) équipée d'une pluralité de diodes électro-luminescentes (2), caractérisée en ce que la plaque support (1) avec ses diodes (2) est recouverte par un couvercle filtrant (3) composé d'un support (5) en matière plastique rigide transparente sur lequel est intimement collée une feuille (6) en matière plastique rigide colorée dans la masse, ladite feuille (6) étant recouverte d'une première couche de peinture (7) transparente à la lumière émise par lesdites diodes (2) puis d'une seconde couche de peinture (8) opaque à ladite lumière et gravée, selon les inscriptions désirées, jusqu'à ladite première couche.

## Description

La présente invention concerne une platine éclairante permettant d'avoir des indications lumineuses sur un panneau d'affichage par exemple pour un tableau de bord d'aéronef.

Le problème est de réaliser une platine éclairante avec un spectre lumineux choisi et contrôlé. L'invention s'applique particulièrement dans le cas d'une platine éclairante d'aéronef devant être compatible avec l'utilisation de jumelles de vision nocturne. Il ne faut pas, en effet, que la source lumineuse constituée par cette platine éclairante altère la sensibilité des jumelles que porte le pilote pour observer l'environnement extérieur de nuit. Dans ce cas précis, il existe une norme sévère exigeant la couleur verte pour la source et avec un spectre contrôlé très étroit. Cependant, l'invention s'applique plus généralement à toute platine éclairante à spectre lumineux choisi et étroit.

On connaît une platine éclairante dont la source lumineuse est constituée d'une pluralité de petites lampes à incandescence filtrées individuellement avec un filtre en verre coloré. Le support portant les lampes et leurs filtres en verre est recouvert par une plaque en plastique rigide transparente usinée et peinte en blanc puis en noir et gravée selon les inscription à faire apparaître.

On connaît également une platine éclairante dans laquelle la source lumineuse est unique et constituée par une plaque électroluminescente souple, filtrée, formée d'une pluralité de feuilles assemblées. Cette plaque est usinée et assemblée entre deux plaques également usinées. La plaque électroluminescente comprend notamment une feuille de phosphore entre deux feuilles électrodes.

La première solution est onéreuse et la seconde également, en outre dans la seconde solution, il y a une baisse des performances dans le temps, par ailleurs dans cette seconde solution à plaque électroluminescente, la source lumineuse est unique ce qui est également un inconvénient en cas d'avarie de la source.

La présente invention a pour but de proposer une platine éclairante de moindre coût que les solutions connues, simple dans sa réalisation, multi-source et dont l'usinage nécessaire aux accessoires qui l'équipe n'est effectué qu'une fois sur l'un des composants de la platine.

L'invention a ainsi pour objet une platine éclairante comportant une plaque support équipée d'une pluralité de diodes électroluminescentes, caractérisée en ce que la plaque support avec ses diodes est recouverte par un couvercle filtrant composé d'un support en matière plastique rigide transparente sur lequel est intimement collée une feuille en matière plastique rigide colorée dans la masse, ladite feuille étant recouverte d'une première couche de peinture transparente à la lumière émise par lesdites diodes puis d'une seconde couche de peinture opaque à ladite lumière et gravée, selon les inscriptions désirées, jusqu'à ladite première couche.

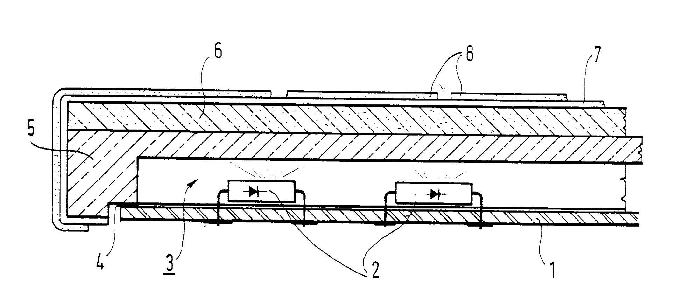

D'autres caractéristiques de l'invention ressortiront de la description d'un exemple de mise en oeuvre de l'invention, faite ci-après en regard du dessin annexé, comprenant une figure unique.

Sur cette figure, on voit une platine éclairante selon l'invention comprenant une plaque support 1 opaque comportant un circuit électrique imprimé pour l'alimentation d'une pluralité de diodes électroluminescentes 2 montées sur cette plaque support. La technologie d'encapsulation des diodes est quelconque mais la technologie "CMS" (Composants Montés en Surface) est particulièrement adaptée à cette application. Cette plaque support 1 avec ses diodes électroluminescentes 2, de couleur verte, est recouverte par un couvercle filtrant 3 collé sur le pourtour de la plaque support 1 au moyen d'un joint continu de colle noire 4, par exemple une colle silicone noire pour l'étanchéité lumineuse.

Ce couvercle filtrant 3 est composé d'un support 5 en matière plastique rigide transparente telle qu'un poly méta crylate sur lequel a été intimement collée une feuille en matière plastique rigide 6 colorée dans la masse, par exemple également en poly méta crylate, colorée en vert, constituant un filtre continu. Un tel filtre est par exemple commercialisé par la société américaine Hoffmann référence 561.1001.

Le support 5 et la feuille filtrante 6 étant de même nature se collent parfaitement bien et l'on peut effectuer l'usinage de l'ensemble support 5 et feuille filtrante 6 une fois leur collage fait et non pas séparément, ce qui évite une opération d'usinage supplémentaire.

Une telle platine répond parfaitement bien à la norme américaine Mil.L. 85 762A pour la couleur appelée "green B".

L'exemple décrit correspond à une application pour une platine d'aéronef compatible, selon la norme ci-dessus, avec l'utilisation de jumelles de vision nocturne.

Pour d'autres applications bien entendu, les diodes 2 de même que la feuille filtrante 6 pourraient être d'une autre couleur.

Une telle platine est ensuite peinte avec une peinture blanche 7 puis avec une peinture noire 8 qui est ensuite gravée jusqu'à l'apparition de la peinture blanche, suivant les inscriptions que l'on désire voir éclairées.

## Revendications

1/ Platine éclairante comportant une plaque support (1) équipée d'une pluralité de diodes électro-luminescentes (2), caractérisée en ce que la plaque support (1) avec ses diodes (2) est recouverte par un couvercle filtrant (3) composé d'un support (5) en matière plastique rigide transparente sur lequel est intimement collée une feuille (6) en matière plastique rigide colorée dans la masse, ladite feuille (6) étant recouverte d'une première couche de peinture (7) transparente à la lumière émise par lesdites diodes (2) puis d'une seconde couche de peinture (8) opaque à ladite lumière et gravée, selon les inscriptions désirées, jusqu'à ladite première couche.

2/ Platine éclairante selon la revendication 1, caractérisée en ce que la matière plastique rigide du support (5) et de ladite feuille (6) est un poly méta crylate.

3/ Platine éclairante selon l'une des revendications 1 ou 2, caractérisée en ce que lesdites diodes électro-luminescentes (2) sont vertes et en ce que ladite feuille (6) en matière plastique rigide colorée dans la masse est également de couleur verte.

4/ Platine éclairante selon l'une des revendications précédentes, caractérisée en ce que ledit couvercle filtrant (3) est collé sur le pourtour de ladite plaque support (1) au moyen d'un joint continu (4) de colle noire.
